# EUROPEAN PATENT SPECIFICATION

(11) **EP 3 397 055 B1**
(45) Date of publication and mention of the grant of the patent: **06.11.2019**
(21) Application number: 16826453.9
(22) Date of filing: 05.12.2016
(51) Int. Cl.: A01N 25/10, A01N 25/34, A01N 53/08, A01N 31/14, A01P 7/00, D06N 3/00, D06M 13/00, D06M 13/224, D06B 21/00, D06N 3/04, D06M 14/10, C08F 255/02, A01N 25/18

(54) **POLYETHYLENE NET OR FABRIC GRAFTED WITH A PVP HYDROGEL FOR THE ABSORPTION AND RELEASE OF PYRETHROIDS**
MIT EINEM PVP-HYDROGEL GEPFROPFTES POLYETHYLEN-NETZ ODER GEWEBE ZUR ABSORPTION UND FREISETZUNG VON PYRETHROIDEN
FILET OU TISSU EN POLYETHYLÈNE GRAFTÉ AVEC UN HYDROGEL DE PVP POUR L'ABSORPTION ET LA LIBÉRATION DE PYRETHROIDS

(30) Priority: 28.12.2015 IT UB20159650
(43) Date of publication of application: 07.11.2018
(73) Proprietor: Sachim Srl, 70017 Putignano (BA) (IT)
(72) Inventor: ARRIGONI, Paolo, 22029 Uggiate Trevano (CO) (IT); VISMARA, Elena, 20157 Milano (IT); STARACE, Giuseppe, 70122 Bari (IT)
(74) Representative: Conversano, Gabriele
(86) International application number: PCT/IB2016/057349
(87) International publication number: WO 2017/115177

(56) References cited:
- WO-A1-2012/164080
- WO-A2-2013/171118
- US-A- 3 939 049
- EL-SAWY ET AL: "Physicochemical study of radiation-grafted LDPE copolymer and its use in metal ions adsorption", NUCLEAR INSTRUMENTS & METHODS IN PHYSICS RESEARCH. SECTION B: BEAM INTERACTIONS WITH MATERIALS AND ATOMS, ELSEVIER BV, NL, vol. 264, no. 2, 1 November 2007 (2007-11-01), pages 227-234, XP022339839, ISSN: 0168-583X, DOI: 10.1016/J.NIMB.2007.09.028
- N H Taher ET AL: "Radiation initiated graft copolymerization of N- vinylpyrrolidone and acrylamide onto low density polyethylene lms by individual and binary system", Radiation Physics and Chemistry (53), 1 January 1998 (1998-01-01), pages 437-444, XP55277550, Retrieved from the Internet: URL:http://ac.els-cdn.com/S0969806X9800008 5/1-s2.0-S0969806X98000085-main.pdf?_tid=3 d973afe-2959-11e6-98b5-00000aab0f02&acdnat =1464937574_c46f65a7788f0b452de2f621eb9232 e2 [retrieved on 2016-06-03]
- BAHATTIN AYDINLI ET AL: "Radiation grafting of various water-soluble monomers on ultra-high molecular weight polyethylene powder: Part I. Grafting conditions and grafting yield", RADIATION PHYSICS AND CHEMISTRY, vol. 60, no. 3, 1 February 2001 (2001-02-01), pages 237-243, XP55277681, AMSTERDAM, NL ISSN: 0969-806X, DOI: 10.1016/S0969-806X(00)00335-2
- JACKIE A. DIRAMIO ET AL: "Poly(ethylene glycol) Methacrylate/Dimethacrylate Hydrogels for Controlled Release of Hydrophobic Drugs", BIOTECHNOLOGY PROGRESS., vol. 21, no. 4, 5 September 2005 (2005-09-05), pages 1281-1288, XP55332866, US ISSN: 8756-7938, DOI: 10.1021/bp0495670
- DATABASE WPI Week 201363 Thomson Scientific, London, GB; AN 2013-N84002 XP002767235, & CN 103 004 757 A (UNIV SHANDONG) 3 April 2013 (2013-04-03)

## Description

### Introduction

The present invention relates to a polyethylene (PE) support, on whose surface a hydrogel comprising polyvinylpyrrolidone (PVP) and ethylene glycol dimethylacrylate (EGDMA) was formed. The support according to the invention is provided with organic molecules and inorganic compounds absorption and release properties, which are better than polyethylene as it is. Preferably, the PE support is in form of net or fabric in PE. The present invention relates also to a method for treating generic nets, yarns, fabrics and supports in PE to provide the same with organic molecules and inorganic compounds absorption and release properties.

### Technical field

At the state of the art there are known supports in polymer material, in the composition of which there are introduced active substances with insecticidal action, or provided with outer layers comprising such active substances. Two examples thereof are described in the documents JPS5065001 and CN101718042. WO2013/171118 discloses an insecticidal textile product with higher strength. The addition of an insecticide, such as deltamethrin, to polyethylene weakens the polymer composition resulting in an easily breaking product prone to formation of holes. This is solved by providing a product comprising two types of yarn, wherein the first yarn comprises the insecticide and the second yarn provides the strength to the textile. But all the known devices are limited, since they are not provided with specific absorption and release properties of organic molecules and therefore, a) yet in the preparation step of the device, it is needed to define the active substance to be comprised therein; b) they cannot be used for absorbing compounds but only for their release in the environment; c) they are not rechargeable, meaning that once the support has released the entire insecticide charge it contained, the same has to be disposed of.

Yet, there are known polymer supports on which compounds have been grafted superficially to give the supports absorption properties towards specific molecules. An example therefor is described in Ranada et al. *"Molecularly imprinted poly (N-vinyl*

*imidazole) based polymers grafted onto nonwoven fabrics for recognition removal of phloretic acid",* Radiation Physics and Chemistry 94(2014). In the cited document, by means of curing induced by gamma radiation at ambient temperature, molecules of phloretic acid have been grafted on the surface of a fabric in PE or PP, to give the same removal properties of phloretic acid.

However, there are no embodiments known of PE supports provided with absorption properties towards organic molecules, and in particular active substances of the pyrethroid class, and inorganic elements and compounds, and in particular metal ions Fe2+, Fe3+ (sulphate and chloride counter-ions) and ions Ca++ (carbonate and chloride counter-ions).

### Object of the invention

Object of the present invention is a polyethylene support, on whose surface a hydrogel comprising polyvinylpyrrolidone (PVP) and ethylene glycol dimethylacrylate (EGDMA) was formed, which is provided with specific absorption and release properties of organic molecules and inorganic compounds. In particular, object of the present invention is a net in polyethylene provided with specific absorption and release properties of organic molecules and inorganic compounds.

In comparison to polyethylene as it is, the support in polyethylene according to the present invention is provided with sensibly stronger absorption and release properties of organic molecules and inorganic compounds. In particular, the absorption and release properties of organic molecules of the pyrethroyd family, and of metal ions, in particular Fe+, Fe3+ and Ca++ present in aqueous solution, are very interesting.

The present invention relates also to a method for forming a PVP and EGDMA hydrogel on polyethylene supports, to give the same organic molecules and inorganic compounds absorption and release properties.

Therefore, polyethylene supports treated by the method according to the present invention are used, among other things, for metal ions removal from aqueous solutions (for example in the treatment of industrial effluents) and for organic molecules release in the environment (for example pesticides release in agriculture).

### Description of the invention

### 1. Method of treatment of PE for providing specific absorption properties

Polyethylene is provided with new and specific absorption properties of organic molecules and inorganic elements and compounds by grafting on its surface pendants naturally adapted to the organic molecules and inorganic elements-compounds to be absorbed. In particular these pendants comprise a superficial hydrogel comprising polyvinylpyrrolidone (PVP) and ethylene glycol dimethylacrylate (EGDMA).

In the following, a preferred embodiment of a polyethylene support is described comprising a superficial hydrogel of the just described type. The PE support is preferably, but without limitation, a net or fabric in polyethylene. The formation of hydrogel on the polyethylene (PE) support can be carried out as described in the following:
a) the PE support is immersed in a toluene solution (Sol1) containing: ethylene glycol dimethylacrylate (EGDMA) and cumene hydroperoxide (CHP).
   The reaction time is preferably between 1 and 20 minutes, and more preferably between 5 and 10 minutes. Preferably, the solution is at ambient temperature and is stirred by magnetic stirrer or by vessel movement, during reaction.
b) the support is immersed in an aqueous solution (Sol2) containing: FeCl₂^{∗}4H₂O, ascorbic acid and polyvinylpyrrolidone (PVP). The reaction time is preferably between 10 and 30 minutes, and more preferably between 15 and 20 minutes. Preferably, the solution is at ambient temperature and is stirred by magnetic stirrer or by vessel movement, during reaction.
c) the support is washed with sodium dodecyl sulfate aqueous solution (Lav1);
d) the support is rinsed with a phosphate buffered saline solution (PBS) (Lav2);
e) the support is allowed to dry, preferably at ambient temperature.

After point d), and prior to drying step, it is possible that the support is washed again with H2O/EtOH 3:2 solution (Lav3) and/or pure ethanol (EtOH) (Lav4).

The just described method allows that on the surface of the PE support a superficial hydrogel is formed, comprising PVP between 5 and 10% by weight (hydrogel weight/support weight). The thus treated support, as it will be clear from the following examples, is able to absorb sensibly greater quantities of organic molecules and inorganic compounds than the polyethylene support as it is. It is to be considered that what indicated in the previous points a. to e., as well as in the following examples, is to be intended as illustrative of a preferred embodiment.

In particular, the reaction times can be varied to consider the support morphology, and be increased in case of nets or fabrics with denser weft.

As a way of example, one of the following methods can be followed:
a. first of all, the PE support is immersed in a toluene solution (Sol1) containing 10% (v/v) EGDMA and 8% (v/v) CHP for 5 minutes at ambient temperature;
b. in the following, the support is immersed in an aqueous solution (Sol2) containing 0.1% (w/v) FeCl₂^{∗}4H₂, 1% (w/v) ascorbic acid and 5% (w/v) PVP 360 for 15 minutes at ambient temperature;
c. the polyethylene samples are flushed with 0.1% (w/v) sodium dodecyl sulfate aqueous solution (Lav1);
d) subsequently, they are rinsed with (PBS) (Lav2);
e) finally, they are washed again with H₂O/EtOH 3:2 solution (Lav3) and possibly pure ethanol (EtOH), finally they are allowed to dry at ambient temperature for 24 h.

Another embodiment of the method is the following:
a. the PE support is fixed in a basin and stirred at 100 rpm at ambient temperature for 30 minutes, immersed in a solution of 21 toluene, 200 ml EGDMA, 160 ml CHP;
b. in the following, the support is immersed in a second solution of 2L water, 2 g FeCl₂-4H₂O, 20 g ascorbic acid, 100 g PVP 360, always stirred at 100 rpm for an additional 30 minutes; c. there follow washing procedures, for example four washings of an hour each, respectively in SDS (sodium dodecyl sulfate), phosphate buffered saline solution PBS, water, ethanol water, and finally water. Then the sample is allowed to air-dry up to reach constant weight.

With reference to the following examples, in particular, it is to be considered that since it is a heterogeneous phase method, in which the reaction occurs at solid-liquid interface, the experts in the art can make the modifications which allow the contact modes between the two phases to be optimized. Dimensions and weights of the PE samples, object of the examples, are not to be considered limiting. Similar treatments can be applied to samples of any shape and dimensions, without departing from the aims of the invention.

### Example 1

A 206 mg polyethylene net sample (ARSA1) is immersed in 100 ml Sol1 at ambient temperature for 5 minutes, and stirred with magnetic stirrer on the beaker bottom. In the following, it is immersed in 100 ml Sol2 for 15 minutes, washed with 0.1% (w/v) sodium dodecyl sulfate aqueous solution (Lavl), rinsed with a phosphate buffered saline solution (PBS) and washed in ethanol. Finally, it is allowed to dry at ambient temperature.

### Example 2

A 194.7 mg polyethylene net sample (ARSA2) is treated as the previous sample, but the sample is stirred manually.

### Example 3

A 206 mg polyethylene net sample (ARSA3) is immersed in 100 ml Sol1 at ambient temperature for 20 minutes, and stirred manually. In the following, it is immersed in 100 ml Sol2 for 45 minutes, washed with 0.1% (w/v) sodium dodecyl sulfate aqueous solution (Lavl), rinsed with a phosphate buffered saline solution (PBS) and washed in ethanol. Finally, it is allowed to dry at ambient temperature.

### Example 4

A 405.7 mg PE sample (ARSA12a) is immersed in 200 ml Sol1 for 15 minutes, and stirred manually, in 200 ml Sol2 for 25 minutes, and in following washed with 0.1% (w/v) sodium dodecyl sulfate aqueous solution (Lavl), rinsed with a phosphate buffered saline solution (PBS) and washed with H2O/EtOH 3:2 solution (Lav3) and with pure ethanol (EtOH) (Lav4). Finally, it is allowed to dry at ambient temperature.

### Example 5

A 430.5 mg PE sample (ARSA 12b) is treated as in example 4, but the final washing in pure ethanol is not carried out.

### Example 6

A 415.7 mg PE sample (ARSA 11b) is immersed in 200 ml Sol1 for 15 minutes, and stirred manually, in 200 ml Sol2 for 25 minutes, and in following washed with 0.1% (w/v) sodium dodecyl sulfate aqueous solution (Lavl), rinsed with a phosphate buffered saline solution (PBS) and washed with H2O/EtOh 3:2 solution (Lav3). Finally, it is allowed to dry at ambient temperature.

The hydrogel PVP quantity obtained on each sample is determined by means of gravimetric analysis, as reported in the following table:

**Table 1**

| Sample | Starting weight | Final weight | % Increase |
|---|---|---|---|
| ARSA1 | 206.0 | 215.1 | 4.4 |
| ARSA2 | 194.7 | 215.0 | 10.4 |
| ARSA3 | 206.0 | 218.5 | 6.1 |
| ARSA12a | 405.7 | 430.8 | 6.2 |
| ARSA12b | 430.5 | 458.5 | 6.5 |
| ARSA11b | 415.7 | 439.1 | 5.6 |

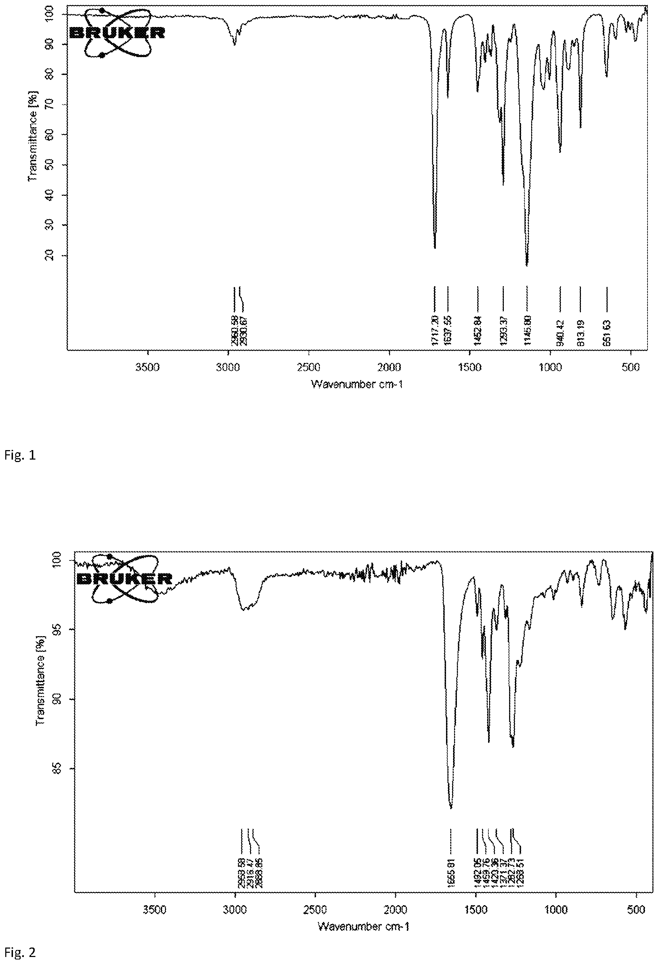

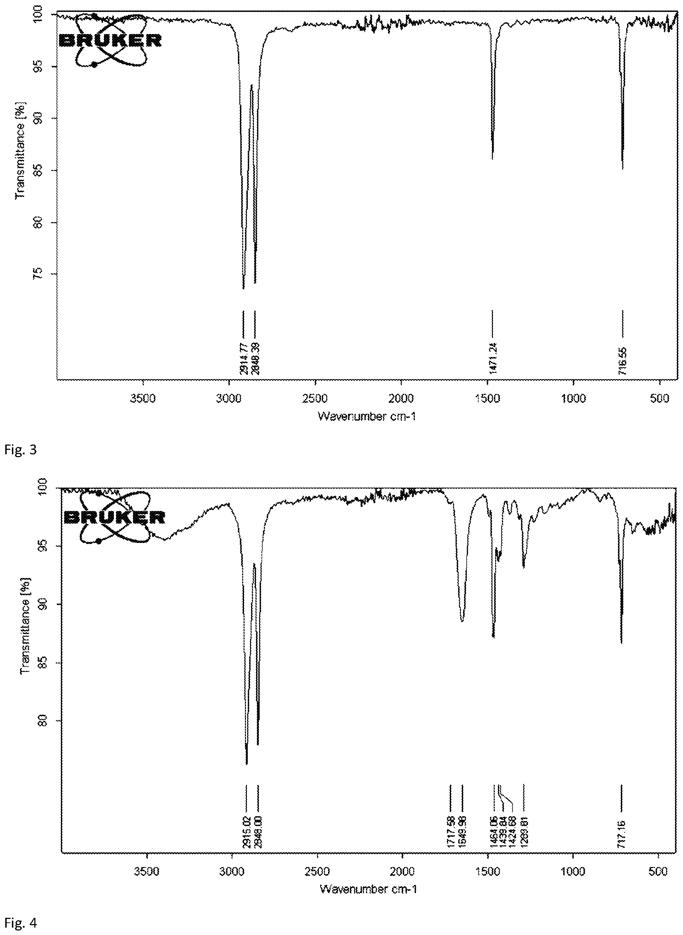

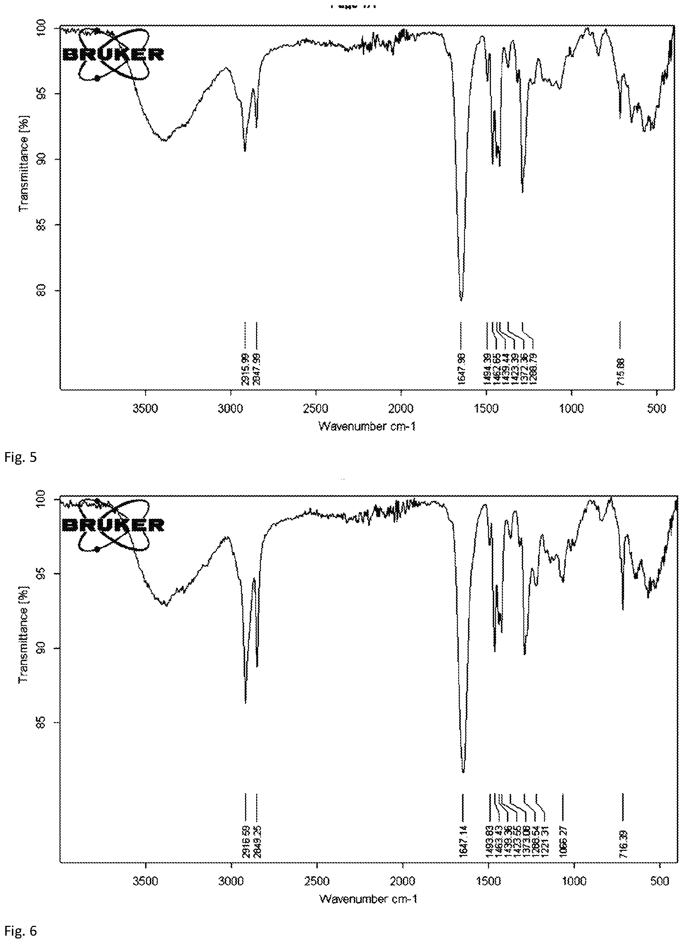

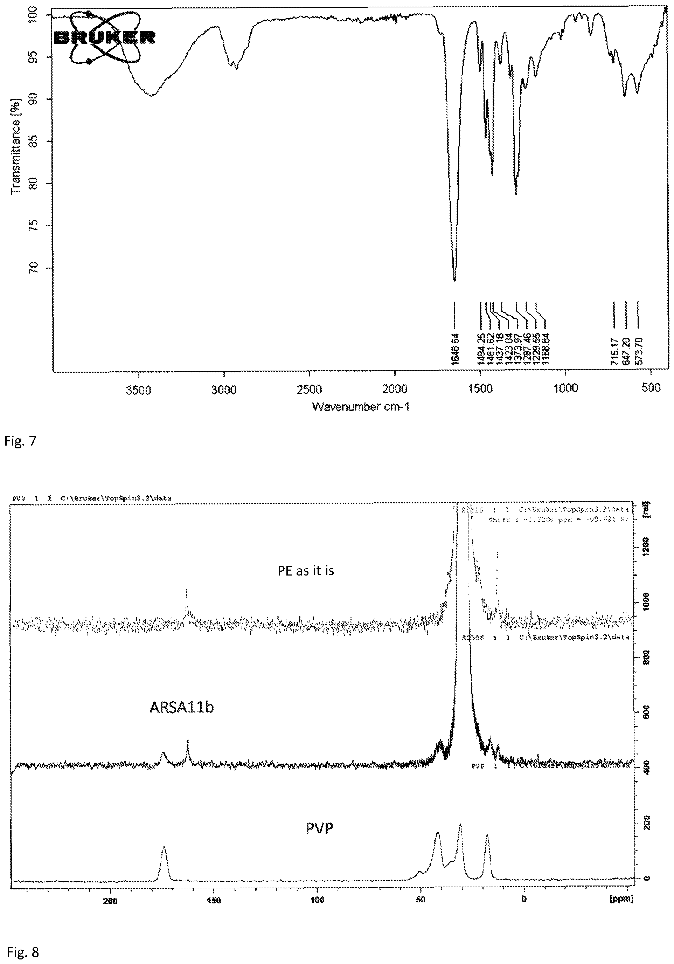

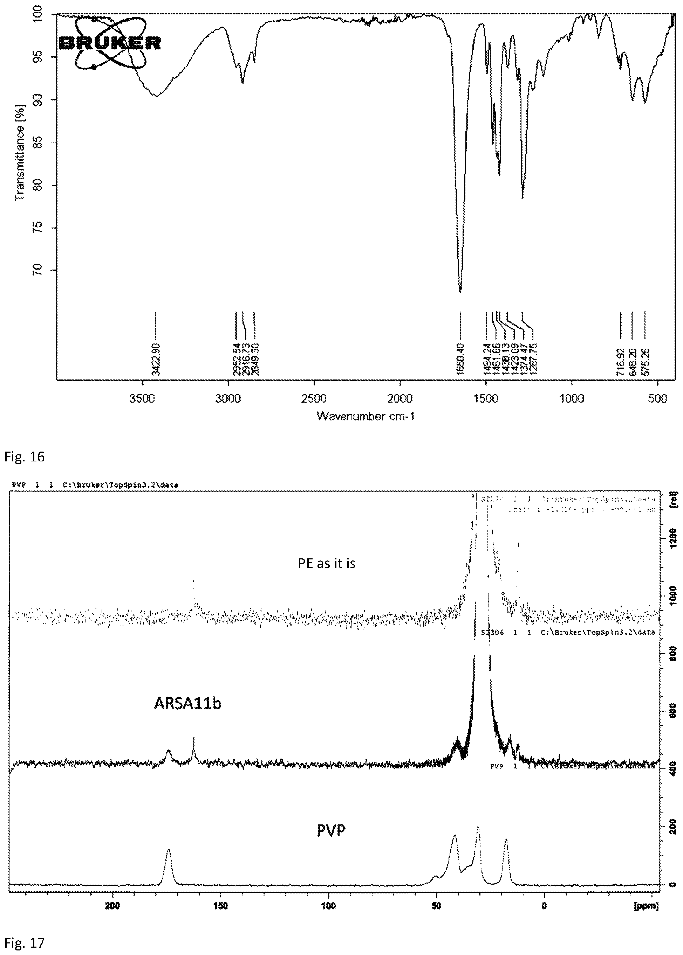

In figures 1 to 7 there are shown the spectra obtained by IR spectroscopy, used to map superficially the various samples treated. There are shown, in the order: EGDMA IR spectrum; PVP IR spectrum; not treated PE IR spectrum; ARSA1 IR spectrum; ARSA2 IR spectrum; ARSA3 IR spectrum; ARSA12a IR spectrum. All spectra highlight the presence of PVP on the net surface. Moreover, in figure 8, it is shown a comparison between the spectra obtained by NMR spectroscopy for: a not treated PE sample, the sample of example 6 (ARSA 11b), the polyvinylpyrrolidone. NMR spectra of fig. 8 provide information about the average chemical composition of ARSA11b sample, for which next to the typical signals of PE there are also provided signals referable to the hydrogel PVP. Even if the NMR spectrum is not quantitative, the comparison of respective intensities of the PVP characteristic signals to the PE characteristic signals, visible in IR and NMR spectra of the same sample (shown in figures 17 and 18 respectively), indicates that the gel layer is concentrated mainly on the PE surface. This is a particularly interesting aspect since the absorption and release phenomena, better described in the following, occur at the PE samples surface.

### 2. Absorption and release of organic molecules

The PE supports treated by the just described method, on whose surface a hydrogel comprising PVP is provided, are provided with sensibly stronger absorption and release properties of organic molecules than those of a not treated PE. This allows to use PE nets on which a superficial hydrogel of PVP is formed to release pesticides in the environment. Moreover, the hydrogel comprising PVP is bound permanently to the PE support, which is also rechargeable with new quantities of active substance once it has released the amount contained therein.

In particular, in the following examples there are described absorption and release properties of some active substances of the pyrethroid class, such as Etofenprox and λ-cyhalothrin. From the examples it is to be deduced that PE nets with superficial hydrogel comprising PVP can absorb, per surface unit, a quantity of active substance 4-5 times greater than the not treated nets.

A PE net, on whose surface a superficial hydrogel is formed according to what just described, can be charged by immersion in solutions containing the organic molecules of interest. In the following examples there are shown the results for Etofenprox, λ-cyhalothrin and deltamethrin. EtOH and n-hexane were tested as solvents for the charging solutions. Other active substances and solvents for the charging solutions can be used without departing from the aims of the invention.

In addition, it is to be considered that the polyethylene supports comprising superficial hydrogel according to the present invention can be used for releasing in the environment the organic molecules charged therein, with different time release profiles. This can be obtained by suitably modifying the hydrogel quantity present on the net surface and the concentration of the active substance contained in the hydrogel, and thus obtaining a more or less prolonged protection. Besides by the release in the air as just described, the insects eradicating effect can be obtained also by direct contact of the insect to the net. In that case, the organic molecule release occurs by contact. Possibly, the PE support can comprise substances, absorbed in the hydrogel or sprayed on its surface, which are able to attract insects, which are to be chosen among the ones known at the state of the art.

### 1.1. Absorption of Etofenprox

### Example 7

The absorption of Etofenprox was tested on samples ARSA 1, ARSA2, ARSA3 and ARSA12a described in the previous examples, by:
f. immersion in a solution of 1.33^{∗}10⁻⁰⁴ M Etofenprox for 24 h;
g. sample air-drying.

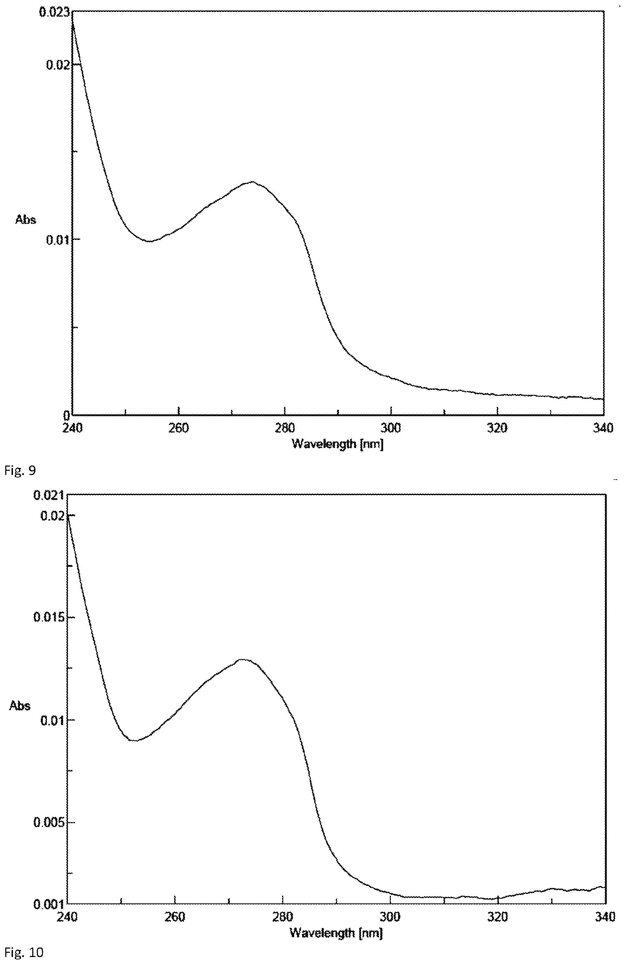

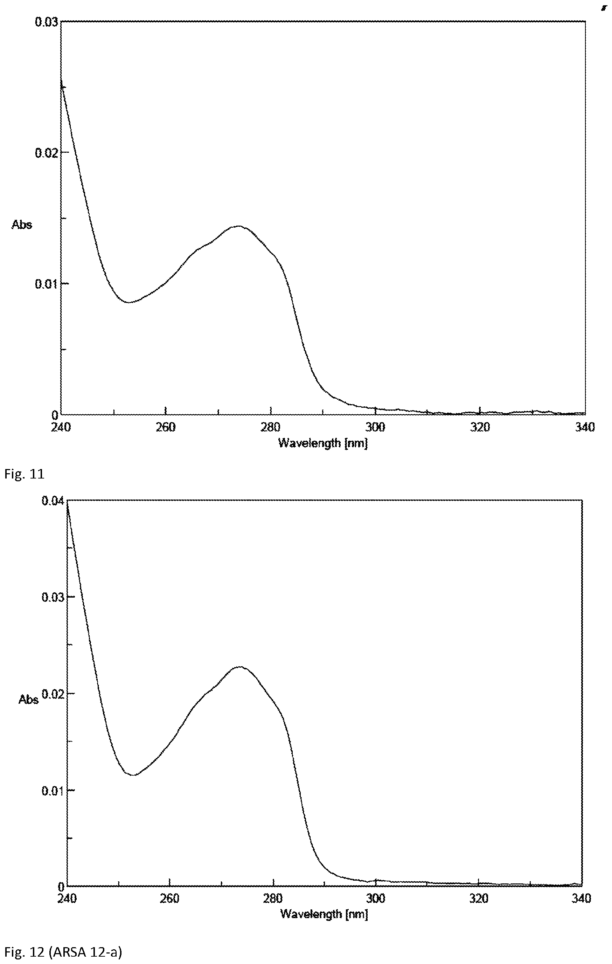

In the following, the release of Etofenprox was tested by:
h. immersion in a 96% EtOH solution at ambient temperature,
which was then analyzed by UV-visible spectroscopy. In particular, the absorbance value (Abs) of the solution was measured for the maximum absorbance point of Etofenprox, corresponding to wave length λ = 274 mm. This value was correlated to the concentration of Etofenprox in EtOH, and so to the released quantity. In figures 9-12 there are reported the spectra obtained by means of UV-visible spectroscopy for the release tests carried out on the yet described samples ARSA 1, ARSA2, ARSA 3, ARSA 12.

As it is reported also in the following table, the nets with hydrogel showed a release of Etofenprox between 19 and 26 mg/m² net, compared to 5 mg/m² PE net as it is.

**Table 2**

| Sample | mg/g net | mg/m² Etofenprox released |
|---|---|---|
| ARSA1 | 0.1664 | 19.89 |
| ARSA2 | 0.1621 | 19.36 |
| ARSA3 | 0.1769 | 21.48 |
| ARSA12a | 0.2178 | 26.09 |

### 1.2 Absorption of λ-cyhalothrin

The absorption of λ-cyhalothrin was tested by immersion in a commercial solution (Karate) of such active substance for 24 h and by following drying in the dark for 48 h. The results showed an absorption of active substance greater than the one obtained with the PE net as it is.

### Example 8

An aqueous solution (Sol3) of Karate Zeon 1.5 diluted 1:10 (1.47 g λ-cyhalothrin / 1000 g PE) was prepared. A PE net sample treated according to what previously described (ARSA25) was immersed in 40 mL Sol3 for 24 h at ambient temperature in a well closed beaker, in the dark. In the following it was removed from the solution and allowed to air-dry in the dark overnight.

### Example 9

Karate Zeon 1.5 as it is (1.47 g λ-cyhalothrin / 100 g PE) was used. ARSA25 was immersed in 50 mL Karate and allowed to absorb for 24 h at ambient temperature in a well closed beaker, in the dark. Removed form the solution and allowed to air-dry in the dark for 48 h. The same test was carried out also for a PE net as it is, without superficial hydrogel.

Example 10 50 mL Karate Zeon were stirred in 50 mL EtOH for 1 h, with the aim of breaking the polymer microcapsules and of extracting λ-cyhalothrin and all what is soluble in EtOH. Subsequently the solution was filtered under vacuum. ARSA25 was immersed in 40 mL limpid solution obtained and allowed to absorb for 24 h at ambient temperature in a well closed beaker, in the dark. Removed from the solution and allowed to air-dry in the dark for 5 h.

The results of the gravimetric analysis are reported in the following table.

**Table 3**

| Example Id | mg λ-cyhalothrin / mg net |
|---|---|
| Example 8 | 0.006 |
| Example 9 | 3.9 |
| Example 9 (PE as it is) | 0.73 |
| Example 10 | 26 (?) |

The question mark at example 10 indicates that, in this case, the quantity of λ-cyhalothrin absorbed by sample 3 cannot be defined because the UV analysis detects the presence both of λ-cyhalothrin and residues of Karate. If it were only λ-cyhalothrin, there would be 26 mg λ-cyhalothrin for 1 g net.

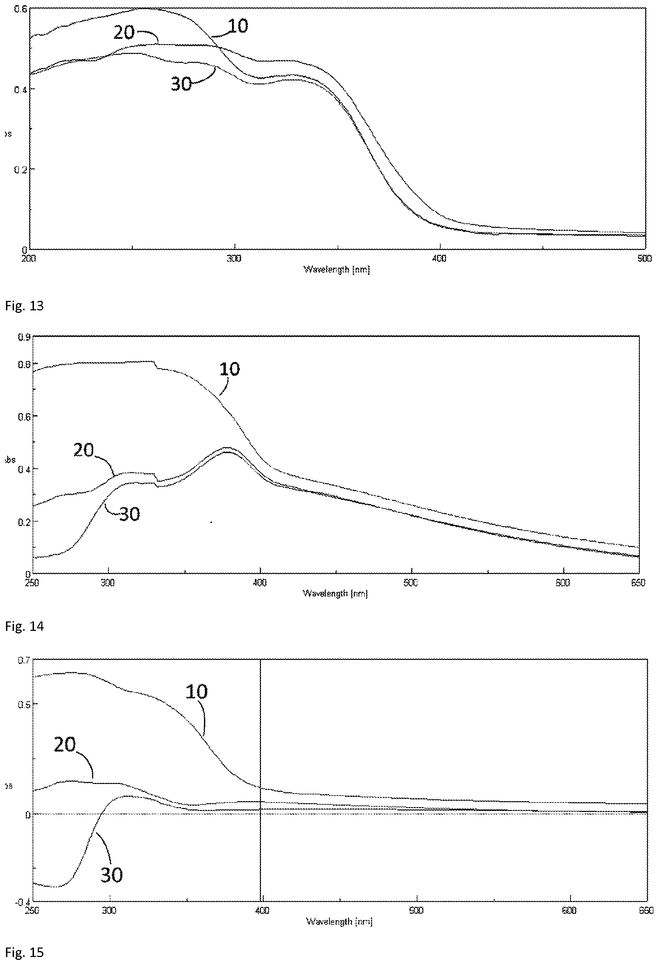

In figures 13, 14 and 15 there are shown the results of the UV-visible spectroscopy analyses for the samples obtained in examples 8, 9 and 10, respectively. The indicated spectra are referred to: sole active substance (30), sample in polyethylene + hydrogel (20) and to sample in PE + hydrogel after absorption of active substance (10). From the spectra it is clearly observed the absorption phenomenon. The quantity of absorbed active substance shown in table 3 was estimated by using a regression line correlating the concentration of λ-cyhalothrin in EtOH with the absorption peak at UV 275 nm.

### 2.3 Absorption of deltamethrin

The absorption and release properties of another active substance of the pyrethroid class, the deltamethrin, were tested in samples of PE nets on which a PVP superficial hydrogel was formed.

### Example 11

A 1.7% deltamethrin solution was diluted in ethanol, 50 ppm concentration. A sample of PE net with PVP hydrogel (ARSA27) was immersed in such solution for 24 h, at ambient temperature, under stirring, and in the following allowed to air-dry. The same sample, after the gravimetric analysis, was immersed in pure ethanol and stirred. A sample of ethanol was withdrawn and analyzed daily by UV spectrophotometer to determine the deltamethrin concentration.

The results indicate that the sample ARSA27 absorbed 0,6% by weight diluted deltamethrin (with respect to the sample weight), and that the release of the same in the just described conditions occurred gradually over 11 days.

### Example 12

A procedure similar to the one in example 11 was carried out, but without diluting the deltamethrin solution. The test was carried out both for the PE net as it is, and for the sample with superficial hydrogel. The absorption of the hydrogel sample was 3 mg deltamethrin / g net, compared to 1.6 mg/g for the PE net as it is.

### 2.4 Use of n-hexane as solvent

### Example 13

For λ-cyhalothrin and etofenprox there were carried out other tests using n-hexane as solvent for the active substance instead of EtOH, with modes similar to those described in the examples where EtOH was used, obtaining absorptions for both the active substances between 3 and 4 mg/g net. Additional reference examples

### 2. Absorption of inorganic elements and compounds

Nets in PE with superficial hydrogel obtained according to what described in point 1 of the present analysis are also provided with specific absorption properties of inorganic compounds, and in particular metal ions Fe2+, Fe3+ (sulfate and chloride counter-ions) and Ca++ ions (carbonate and chloride counter-ions). This absorption property is due to the presence in the hydrogel of polyvinylpyrrolidone (PVP), to which it is ascribed the nets capacity to fix metal ions by means of a specific ion interaction.

This absorption property of ions can occur both for the treatment of industrial effluents (removal of ions dissolved in aqueous solutions) and for removal of powders dispersed in air. In both cases the principle of use is similar: a net in polyethylene according to the invention is immersed in the medium containing ions to be removed, and removes the same by absorbing them when in contact thereto. Conveniently, the net in polyethylene according to the present invention can be used for covering industrial areas from which air pollution phenomena arise due to metal powders (for example in steel mills and similar factories), or as additional step of treatment after the removal of suspended solids, in the treatment of industrial sewage.

### Example 14 (not according to the invention)

A PE net sample on whose surface a PVP hydrogel is formed, was immersed in a solution containing FeSO₄. The quantity of salt in solution was such that the metal salt to PVP mass ratio was 3:1.

This procedure was carried out for four net samples in PE as it is and for four net samples in PE with superficial hydrogel, which were extracted from the solution at different times. Each sample extracted was allowed to air-dry up to reach constant weight. Each sample was subjected to gravimetric analysis, for determining the quantity of FeSO4 absorbed and to elementary analysis ICP-OES (inductively coupled plasma - optical emission spectroscopy) for determining the quantity of iron absorbed. The following table shows respective results.

**Table 4**

| Sample | Time (h) | Gravimetric analysis FeSO4 (w%) | ICP-OES analysis Fe (w%) |
|---|---|---|---|
| PE + Hydrogel | 9 | 0 | 0. 35 |
| PE + Hydrogel | 24 | 1.49 | 0. 57 |
| PE + Hydrogel | 33 | 4.53 | 0.97 |
| PE + Hydrogel | 48 | 3. 73 | 1.30 |
| PE | 9 | -8.8 | 0.21 |
| PE | 24 | 1.01 | 0.35 |
| PE | 33 | 0.35 | 0.32 |

The IPC results show a greater efficiency of net samples with hydrogel in progressive absorption of iron compared to an initial absorption phenomenon only of the net as it is.

### Example 15

By preparing solutions of FeCl₃, CaCl₂ and CaCO₃, always with salt/PVP mass ratio 3:1, the following results are obtained in the absorption tests.

**Table 5**

| Sample | Time (h) | Gravimetric analysis FeCl₃ (w%) |
|---|---|---|
| PE + Hydrogel | 24 | 0.5 |
| PE + Hydrogel | 72 | 0.7 |
| PE | 24 | 0.1 |

**Table 6**

| Sample | Time (h) | Gravimetric analysis CaCl₂ (w%) |
|---|---|---|
| PE + Hydrogel | 24 | 0.3 |
| PE + Hydrogel | 72 | 0.3 |
| PE | 24 | 0.5 |

**Table 7**

| Sample | Time (h) | Gravimetric analysis CaCO₃ (w%) |
|---|---|---|
| PE + Hydrogel | 72 | 2.4 |

## Claims

1. Polyethylene support in form of net or fabric, comprising, grafted on the surface of said support, a hydrogel comprising polyvinylpyrrolidone and ethylene glycol dimethylacrylate (EGDMA), **characterized in that** in said hydrogel it is also absorbed at least an active substance of the pyrethroid class.

2. Polyethylene support according to claim 1, **characterized in that** said at least active substance is selected among Etofenprox, λ-cyhalothrin, deltamethrin, cypermethrin.

3. Polyethylene support according to claim 1, 2 or 3, **characterized in that** the hydrogel to polyethylene mass ratio is between 0.05 and 0.1.

4. Method for preparing a support according to any one of the preceding claims, **characterized by** the following steps of:
a) the PE support is immersed in a toluene solution (Sol1) containing: ethylene glycol dimethylacrylate (EGDMA) and cumene hydroperoxide (CHP);
b) the support is immersed in an aqueous solution (Sol2) containing: FeCl₂^{∗}4H₂O, ascorbic acid and polyvinylpyrrolidone (PVP);
c) the support is washed with sodium dodecyl sulfate aqueous solution;
d) the support is rinsed with a phosphate buffered saline solution (PBS);
e) the support is washed with EtOH or a solution comprising EtOH;
f) the support is allowed to dry.
g) the support is immersed in a solution containing said active substance.

## Patentansprüche

1. Polyethylen-Träger in Form eines Netzes oder Gewebes, umfassend, auf die Oberfläche des genannten Trägers aufgepfropft, ein Hydrogel, umfassend Polyvinylpyrrolidon und Ethylenglykol-Dimethylacrylat (EGDMA), **dadurch gekennzeichnet, dass** im genannten Hydrogel auch mindestens eine aktive Substanz der Pyrethroid-Klasse absorbiert ist.

2. Polyethylen-Träger nach Anspruch 1, **dadurch gekennzeichnet, dass** die genannte mindestens aktive Substanz ausgewählt ist aus Etofenprox, λ-Cyhalothrin, Deltamethrin, Cypermethrin.

3. Polyethylen-Träger nach Anspruch 1, 2 oder 3, **dadurch gekennzeichnet, dass** das Massenverhältnis Hydrogel zu Polyethylen zwischen 0,05 und 0,1 liegt.

4. Verfahren zur Herstellung eines Trägers nach einem der vorhergehenden Ansprüche, **gekennzeichnet durch** die folgenden Schritte:
a) der PE-Träger wird in eine Toluol-Lösung (Soll) getaucht, die Ethylen-Glykol-Dimethylacrylat (EGDMA) und CumolHydroperoxid (CHP), enthält;
b) der Träger wird in eine wässrige Lösung (Sol2) getaucht, die FeCl₂ · 4H₂O, Ascorbinsäure und Polyvinyl-Pyrrolidon (PVP), enthält;
c) der Träger wird mit wässriger Natrium-Dodecyl-Sulfat-Lösung gewaschen;
d) der Träger wird mit einer phosphatgepufferten Salzlösung (PBS) gespült;
e) der Träger wird mit EtOH oder einer EtOH umfassenden Lösung gewaschen;
f) der Träger wird trocknen gelassen.
g) der Träger wird in eine den Wirkstoff enthaltende Lösung getaucht.

## Revendications

1. Support en polyéthylène sous forme de filet ou de tissu, comprenant greffé à la surface dudit support, un hydrogel comprenant polyvinylpyrrolidone et diméthylacrylate d'éthylène glycol (EGDMA), **caractérisé en ce que** dans le dit hydrogel est également absorbée au moins une substance active de la classe des pyréthroïdes.

2. Support en polyéthylène selon la revendication 1, **caractérisé en ce que** ladite au moins substance active est choisie parmi Etofenprox, X-cyhalothrine, deltaméthrine, cyperméthrine.

3. Support en polyéthylène selon la revendication 1, 2 ou 3, **caractérisé en ce que** le rapport en masse entre l'hydrogel et le polyéthylène est compris entre 0,05 et 0,1.

4. Procédé de préparation d'un support selon l'une quelconque des revendications précédentes, **caractérisé par** les étapes suivantes:
a) le support PE est immergé dans une solution de toluène (Sol1) contenant diméthylacrylate d'éthylène glycol (EGDMA) et hydroperoxyde de cumène (CHP);
b) le support est immergé dans une solution aqueuse (Sol2) contenant: FeCl₂ ^{∗} 4H₂O, acide ascorbique et polyvinylpyrrolidone (PVP);
c) le support est lavé avec une solution aqueuse de dodécyl sulfate de sodium;
d) le support est rincé avec une solution saline tamponnée au phosphate (PBS);
e) le support est lavé avec EtOH ou une solution comprenant EtOH;
f) le support est laissé sécher;
g) le support est immergé dans une solution contenant ladite substance active.
